# EUROPEAN PATENT APPLICATION

(11) **EP 4 744 496 A1**
(43) Date of publication of application: **20.05.2026**
(21) Application number: 24839823.2
(22) Date of filing: 12.07.2024
(51) Int. Cl.: A23C 20/02

(54) **CHEESE-LIKE FOOD AND METHOD FOR PRODUCING CHEESE-LIKE FOOD**

(30) Priority: 12.07.2023 JP 2023114196
(71) Applicant: Kagome Co., Ltd., Nagoya-shi, Aichi 460-0003 (JP)
(72) Inventor: NIHONGI, Chihiro, Tokyo 141-0031 (JP); KUZUHARA, Daishi, Tokyo 103-0014 (JP)
(74) Representative: Arnold & Siedsma
(86) International application number: PCT/JP2024/025305
(87) International publication number: WO 2025/013935

(57) **Abstract**

A cheese-like food according to the present invention contains at least a plant-derived processed product, an acid-treated starch, and a hydroxypropylated starch, in which a raw material of the acid-treated starch is a starch derived from a waxy crop. A method for producing a cheese-like food according to the present invention includes at least a mixing. In the mixing, at least a plant-derived processed product, an acid-treated starch, and a hydroxypropylated starch are mixed by a person or a device, in which a raw material of the acid-treated starch is a starch derived from a waxy crop.

## Description

### TECHNICAL FIELD

The present invention relates to a cheese-like food and a method for producing a cheese-like food.

Priority is claimed on Japanese Patent Application No. 2023-114196, filed July 12, 2023, the content of which is incorporated herein by reference.

### BACKGROUND ART

In recent years, alternative foods that replace some or all of animal-derived raw materials with plant-derived raw materials to obtain a food-like animal-derived food have been developed.

The reason for this is that there are people who avoid intake of the animal-derived food from various viewpoints. One reason is that the animal-derived food contains cholesterol. Another reason is that vegetarians and vegans do not consume the animal-derived food. Still another reason is the environmental load problem caused by animal breeding. For the reasons, there is a certain demand for an alternative food using a plant-derived processed product.

A specific aspect of the alternative food is a meat substitute produced using a plant-derived raw material without using meat. Another specific aspect thereof is an egg substitute produced using a plant-derived raw material without using an egg. Still another specific aspect thereof is an alternative cheese produced using a plant-derived raw material without using a dairy raw material. In the related art, various studies on foods related to the alternative cheese have been made.

Patent Document 1 discloses a cheese-like food having favorable meltability upon heating while maintaining favorable shape retention at normal temperature, and containing specific oxidized starch, hydroxypropylated starch, and specific fat.

Patent Document 2 discloses a method for producing a cheese-like food, in which, as a measure for improving productivity, an acid-treated starch, water, and fat are mixed at specified proportions.

Patent Document 3 discloses a cheese-like food having formability, heating meltability, and softness during cooling, in which contents of an acid-treated starch, specific fat, and protein are constant.

### Citation List

### Patent Document

Patent Document 1: Japanese Unexamined Patent Application, First Publication No. 2018-174712
Patent Document 2: Japanese Unexamined Patent Application, First Publication No. 2022-060294
Patent Document 3: Japanese Patent No. 6287828

### SUMMARY OF INVENTION

### Technical Problem

An object to be achieved by the present invention is to produce a cheese-like food that is in a solid state in a temperature range or normal temperature or lower, and that melts and has stretchability upon heating.

A production problem in the cheese-like food is to impart cheese-like physical properties to the food. There are various types of cheeses, and the physical properties thereof vary depending on the type. The present inventors have focused on cheeses such as mozzarella cheese, which are in a solid state in a temperature range of normal temperature or lower, and which melt and have stretchability upon heating. Since the physical properties are in a solid state at normal temperature or lower, storage, carrying, and handling such as cutting are favorable. In addition, by melting upon heating, a smooth texture can be obtained during eating. Furthermore, by having stretchability, it can be enjoyed in appearance. Such physical properties are particularly useful for use as a topping for pizza.

### Solution to Problem

The present inventors have studied how to impart the cheese-like physical properties to the cheese-like food. Specifically, it is physical properties of a cheese used as a topping for pizza or the like, in which the cheese is in a solid state in a temperature range of normal temperature or lower and melts and has stretchability upon heating. As a result of the studies, the present inventors have found that the following are factors which contribute to the above-described cheese-like physical properties: (1) an acid-treated starch can impart physical properties in which the cheese-like food is in a solid state in a temperature range of normal temperature or lower and melts upon heating; (2) a hydroxypropylated starch can impart stretchability upon heating; and (3) by using a starch derived from a waxy crop as the acid-treated starch, the characteristics of the hydroxypropylated starch can be utilized. By applying the above-described mechanism, the present invention is defined as follows.

A cheese-like food according to an aspect of the present invention contains at least a plant-derived processed product, an acid-treated starch, and a hydroxypropylated starch, in which a raw material of the acid-treated starch is a starch derived from a waxy crop. It is preferable that a raw material of the hydroxypropylated starch in the food is a starch derived from tapioca.

In addition, it is preferable that a content of the acid-treated starch in the food is 5.0% by weight or more and 30.0% by weight or less, and a content of the hydroxypropylated starch is 1.0% by weight or more and 20.0% by weight or less.

Furthermore, it is preferable that a weight ratio of a starch content to a moisture content in the food is 0.20 or more and 0.63 or less, and a weight ratio of an acid-treated starch content to the moisture content in the food is 0.10 or more and 0.70 or less.

Furthermore, a cheese-like food according to an aspect of the present invention is solid at 25°C, has fluidity at least at 70°C or higher and 100°C or lower, in which, when 50 g of the cheese-like food according to the aspect of the present invention is heated by a microwave oven at 500 W for 60 seconds and one end of the food is stretched at a speed of 10 cm/s, the food stretches by at least 15 cm until being broken.

A method for producing a cheese-like food according to an aspect of the present invention includes at least a mixing. Here, in the mixing step, at least a plant-derived processed product, an acid-treated starch, and a hydroxypropylated starch are mixed by a person or a device to obtain a mixture, in which a raw material of the acid-treated starch is a starch derived from a waxy crop. It is preferable that a raw material of the hydroxypropylated starch is a starch derived from tapioca.

In addition, it is preferable that a content of the acid-treated starch in the mixture is 5.0% by weight or more and 30.0% by weight or less, and a content of the hydroxypropylated starch in the mixture is 1.0% by weight or more and 20.0% by weight or less.

The production method according to the aspect of the present invention further includes homogenization. Here, the mixture is homogenized by a person or a device. It is preferable that a weight ratio of a starch content to a moisture content in the mixture is 0.20 or more and less than 0.63, and a weight ratio of an acid-treated starch content to the moisture content in the mixture is 0.10 or more and less than 0.70.

### Advantageous Effects of Invention

According to the present invention, it is possible to provide a cheese-like food that is in a solid state in a temperature range of normal temperature or lower and that melts and has stretchability during heating.

### BRIEF DESCRIPTION OF DRAWINGS

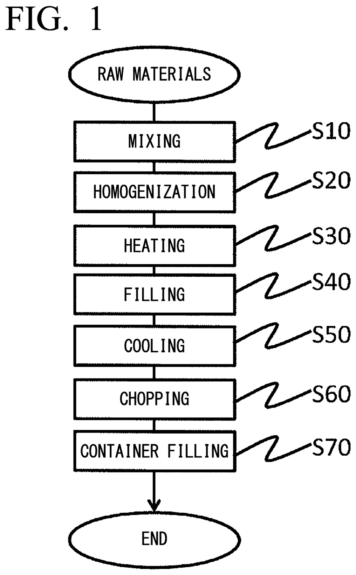

[FIG. 1] A flowchart of a method for producing a cheese-like food according to the embodiment of the present invention.

### DESCRIPTION OF EMBODIMENTS

### <Cheese>

In the present specification, a cheese is a food produced by a method of separating a coagulum formed by protein, mainly casein, by acidification with lactic acid fermentation or the like or by addition of a coagulating enzyme from milk obtained from livestock such as cows, water buffaloes, sheep, and goats as a raw material, and separating the coagulum from the whey. Furthermore, the cheese also includes a separated coagulum that is fermented and ripened with microorganisms such as lactic acid bacteria and mold. Specific examples thereof include mozzarella, cottage, camembert, brie, blue, emmental, cheddar, edam, and gouda.

### <Cheese-like food>

The cheese-like food according to the embodiment of the present invention (hereinafter, also referred to as "present cheese-like food") is a food in which some or all of dairy raw materials in the cheese are replaced with a plant-derived processed product. In addition, the present cheese-like food is a food that appears to be cheese or is an alternative food to cheese in use.

### <Plant-derived processed product>

The plant-derived processed product can be used in the present cheese-like food. The plant-derived processed product is a processed product, an origin of which is a plant raw material. Specific examples thereof include a processed product of vegetables or fruits, a cereal processed product, and a nut-and-seed processed product.

### <Processed product of vegetables or fruits>

The processed product of vegetables or fruits can be used in the present cheese-like food. The type of the vegetables is not limited, and examples thereof include tomatoes, carrots, turnips, Japanese radishes, spinach, bell peppers, asparagus, barley leaves, crown daisies, mustard spinach, salad greens, Japanese mustard spinach, ashitaba, sweet potatoes, potatoes, moroheiya, paprika, parsley, celery, mitsuba, lettuce, radishes, perilla, eggplants, common beans, pumpkins, burdocks, welsh onions, ginger, garlic, garlic chives, corn, field peas, okra, turnips, cucumbers, gourds, zucchinis, loofahs, and sprouts. The type of fruits is also not limited, and examples thereof include citrus fruits such as lemons, oranges, navel oranges, grapefruits, mandarins, limes, sudachi, yuzu, shikuwasha, and tankan; apples, Japanese ume, peaches, cherries, apricots, plums, prunes, camu-camu fruit, pears, European pears, loquats, strawberries, raspberries, blackberries, cassis, cranberries, blueberries, melons, watermelons, kiwifruits, pomegranates, grapes, bananas, guavas, acerolas, pineapples, mangoes, passion fruits, and lychees. A form of the processed product is not particularly limited, and examples thereof include a juice, a juice pulp, a concentrated juice of the juice, and a dried powder. From the viewpoint of color tone of the present cheese-like food, the vegetables or fruits suitable for use are preferably carotenoid-containing plants.

### <Carotenoid-containing plant>

The carotenoid-containing plant in the present embodiment is a plant containing carotenoids. The carotenoid is a yellow, orange, or red dye that is widely present in animals and plants. The processed product of the carotenoid-containing plant is a processed product, a raw material of which is the carotenoid-containing plant. A form of the processed product is not particularly limited, and examples thereof include a juice, a juice pulp, a concentrated juice of the juice, and a dried powder.

### <Cereal processed product>

The cereal processed product according to the present embodiment is a processed cereal. The cereal in the present embodiment includes a plant of Poaceae family and a plant of Fabaceae family. Examples of the cereal include rice, wheat, barley, oats, soybeans, peas, kidney beans, broad beans, chickpeas, lentils, foxtail millet, Japanese barnyard millet, and proso millet.

The cereal processed product according to the present embodiment is preferably a juice or a puree of the cereal. Examples of the cereal processed product include rice milk, soy milk, and oat milk.

The purpose of using the cereal processed product in the present invention is to impart richness to the cheese-like food and to increase nutritional components. The protein, carbohydrate, and the like contained in the cereal processed product can impart richness to the food. In addition, it is expected that the nutritional value is improved by the component. Another purpose of using the cereal processed product is color tone adjustment, particularly lightness adjustment. In a case where the cereal processed product has a color tone close to white, lightness of a mixing solution can be increased, and thus the color tone can be made bright. From the viewpoint, the cereal of the cereal processed product used in the present invention is preferably a cereal in which the color tone of the processed product is white, such as rice, wheat, oats, soybean, white kidney bean, and pea.

A lower limit value of a content of the cereal processed product in the present cheese-like food is preferably 10% by weight, more preferably 30% by weight, and still more preferably 50% by weight. An upper limit value of the content of the cereal processed product in the present cheese-like food is preferably 50% by weight, and more preferably 70% by weight.

### <Nut-and-seed processed product>

The nut-and-seed processed product according to the present embodiment is a processed seed. The nut and seed in the present embodiment are seeds that are considered to be edible, excluding the cereal. Examples of the nut and seed include almond, chestnut, walnut, peanut, hazelnut, pistachio, coconut, sunflower, ginkgo, and macadamia. The nut-and-seed processed product according to the present embodiment is preferably a juice, an extract, or a puree of the nut and seed.

The purpose of using the nut-and-seed processed product in the present invention is to impart richness to the cheese-like food and to increase nutritional components. The protein, lipid, carbohydrate, and the like contained in the nut-and-seed processed product can impart richness to the food. In addition, it is expected that the nutritional value is improved by the component. Another purpose of using the nut-and-seed processed product is color tone adjustment, particularly lightness adjustment. In a case where the nut-and-seed processed product has a color tone close to white, lightness of a mixing solution can be increased, and thus the color tone can be made bright. From the viewpoint, the nut and seed of the nut-and-seed processed product used in the present invention is preferably a nut and seed in which the color tone of the processed product is close to white, such as almond puree, cashew paste, and coconut puree.

### <Animal-derived raw material>

An animal-derived raw material according to the present embodiment is a raw material of a food, an origin of which is an animal. Examples of the animal-derived raw material include raw materials derived from cows, pigs, chickens, chicken eggs, sheep, horses, and fish. In the present cheese-like food, animal-derived milk is not excluded from use. However, from the viewpoint of minimizing the use of the animal-derived raw material, a weight proportion of the animal-derived milk contained in the present cheese-like food is preferably 50% by weight or less. The weight proportion thereof is more preferably 20% by weight or less, still more preferably 10% by weight or less, and most preferably 0% by weight.

### <Edible oil and fat>

An edible oil and fat according to the present embodiment is an oil and fat used for food. The purpose of using the edible oil and fat in the present invention is to adjust flavor and to adjust nutritional components. The edible oil and fat used in the present invention is preferably derived from plants. More preferably, the edible oil and fat is a plant-derived edible oil that is liquid at normal temperature. Specific examples of the edible oil and fat include linseed oil, perilla oil, olive oil, grapeseed oil, corn oil, sesame oil, rice bran oil, soybean oil, rapeseed oil, palm oil, sunflower oil, safflower oil, and cottonseed oil.

In the present invention, it is preferable that the edible oil and fat and the plant-derived processed product are mixed and homogenized. By homogenizing these components, the present cheese-like food has no taste unevenness and has a smooth taste.

A content of the edible oil and fat in the present cheese-like food is not particularly limited. A lower limit value of the content of the edible oil and fat in the present cheese-like food is preferably 1% by weight, more preferably 5% by weight, and still more preferably 10% by weight. An upper limit value of the content of the edible oil and fat in the present cheese-like food is preferably 30% by weight, more preferably 20% by weight, and still more preferably 10% by weight. By setting the value within the above-described range, richness suitable for the cheese-like food is imparted.

### <Protein raw material>

The present invention does not exclude the use of a protein raw material as a raw material of the present cheese-like food. Examples of an origin of the protein raw material include milk, livestock meat, eggs, legumes, and grains. From the viewpoint of not using the animal-derived raw material, the protein raw material is preferably a plant-derived raw material such as soybean.

### <Seasoning>

The present invention does not exclude the use of a seasoning as a raw material of the present cheese-like food. The seasoning is a material used for adjusting the taste of the dish. Examples of the seasoning include sugar, vinegar, mirin, soy sauce, worcestershire sauce, salt, umami seasoning, yeast extract, and meat extract. From the viewpoint of not using the animal-derived raw material, it is preferable not to use an animal-derived raw material such as livestock meat extract and fish extract.

### <Additive>

Various additives may be appropriately added to the present cheese-like food. The additive is generally added to foods and drinks, and examples thereof include a sweetener, an acidifier, a coloring material, a pH adjuster, a nutritional enhancer, an antioxidant, a flavoring agent, a thickening agent, a coagulant, and an emulsifier.

It is preferable to use a hydrocolloid in production of the present cheese-like food according to the present invention. The hydrocolloid is a polymer substance that dissolves or disperses in water to generate viscosity. The hydrocolloid is called "thickening agent" used for the purpose of thickening effect, "gelling agent" used for the purpose of gelling, "stabilizer" or "thickening stabilizer" used for the purpose of increasing the viscosity to stabilize the food component uniformly, or the like.

The hydrocolloid that can be used in the present cheese-like food is not particularly limited, and examples thereof include pectin, agar, starch, carrageenan, guar gum, locust bean gum, galactomannan, alginates, arabic gum, cellulose, and gelatin.

As an additive used in production of the present cheese-like food, a preferred hydrocolloid is starch. In particular, it is preferable to use an acid-treated starch and a hydroxypropylated starch.

### <Acid-treated starch>

The acid-treated starch according to the present embodiment is a starch that has been subjected to at least acid treatment. It is preferably a starch that has been subjected to only acid treatment. The effect of acid-treating the starch is that a starch chain is decomposed by the acid. The purpose of using the acid-treated starch is to impart characteristics in which the present cheese-like food is in a solid state in a temperature range of normal temperature or lower and melts upon heating. A raw material of the acid-treated starch used in the present cheese-like food is a starch derived from waxy crop. It is preferably derived from a modified waxy crop. The purpose of using the starch derived from waxy crop is to impart stretchability during heating melt. By using the starch derived from waxy crop, it is possible to take advantage of impartation of stretchability by the hydroxypropylated starch, which will be described later. Examples of the grain from which the starch is derived include potato, tapioca, rice, wheat, corn, high-amylose corn, waxy corn, and sweet potato. The acid-treated starch derived from the waxy crop, which is used in the present cheese-like food, is an acid-treated starch derived from waxy potato or an acid-treated starch derived from modified waxy potato. An oxidized starch is a processed starch obtained by oxidizing the starch with an oxidizing agent, and is different from the acid-treated starch.

### <Hydroxypropylated starch>

The hydroxypropylated starch according to the present embodiment is a starch that has been subjected to at least hydroxypropylation. It is preferably a starch that has been subjected to only hydroxypropylation. The purpose of using the hydroxypropylated starch is to impart a cheese-like texture and to impart stretchability upon heating. It is preferable that a raw material of the hydroxypropylated starch used in the present cheese-like food is a starch derived from tapioca. It is found that, by using the acid-treated starch derived from waxy crop and the hydroxypropylated starch derived from tapioca in combination, the stretchability of the cheese-like food is less affected, and particularly, the stretchability is improved. A degree of hydroxypropylation of the starch in the present invention may be appropriately set in consideration of the cheese-like stretchability. In general, as the degree of hydroxypropylation is higher, the stretchability in the present cheese-like food is increased.

### <Conceptual configuration of method for producing present cheese-like food>

The method for producing the present cheese-like food (hereinafter, also referred to as "present production method" in this section) is conceptually configured by at least mixing.

FIG. 1 shows a flow of the present production method. The present production method is configured by mixing (S10), homogenization (S20), heating (S30), filling (S40), cooling (S50), chopping (S60), and container filling (S70).

### <Mixing (S10)>

At least the starches and the plant-derived processed product are mixed in the mixing step. The purpose of mixing the starches and the plant-derived processed product is to prepare a mixing solution for a cheese-like food. Raw materials that are not excluded as raw materials to be mixed include edible oil and fat, animal-derived raw material, dietary fiber, seasoning, and other additives. A mixture is obtained by the mixing.

### <Homogenization (S20)>

The present production method appropriately employs homogenization. The purpose of homogenizing the mixing solution is to homogenize properties and flavor. By homogenizing the mixing solution, the plant-derived processed product, the edible oil and fat, and the like are emulsified. As a result, the flavor derived from the edible oil and fat and the plant-derived raw material can be felt evenly. The emulsified state is preferably an oil-in-water type (hereinafter, also referred to as "O/W type"). The means for homogenization is not limited. Examples of the means for homogenization include high-pressure treatment, pulverization treatment, mixing treatment, and milling treatment.

### <Heating (S30)>

The present production method appropriately employs heating. One of the purposes of the heating is to sterilize the mixture. Another purpose of the heating is gelatinization of the starch. The heating method may be a known method, and examples thereof include a plate-type sterilization method and a tubular-type sterilization method.

### <Filling (S40)>

The present production method appropriately employs filling. The heated mixture is filled into a container. One of the purposes of the filling is forming of the cheese-like food. The filling method may be a known method. The container in which the present cheese-like food is filled may be a known container.

### <Cooling (S50)>

The present production method appropriately employs cooling. One of the purposes of the cooling is coagulation of the mixture. The mixture containing the acid-treated starch is solidified by the cooling. The cooling method may be a known method. The cooling temperature is not particularly limited, but is preferably 10°C or lower.

### <Chopping (S60)>

The present production method appropriately employs chopping. One of the purposes of the chopping is to form a shape suitable for provision to consumers. The chopping method may be a known method, and examples thereof include a dicer, Comitrol, and a shredder.

### <Container filling (S70)>

The present production method appropriately employs container filling. The heated mixture is filled into a container. The container filling method may be a known method. The container in which the present cheese-like food is filled may be a known container, and examples thereof include a plastic container, a vinyl container, a can, a bottle, a paper container, and a PET container.

### <Features of present cheese-like food>

The features of the present cheese-like food are that it is in a solid state in a temperature range of normal temperature or lower, has meltability upon heating, and has stretchability. Therefore, it can be sold for refrigerated distribution and for distribution at normal temperature. In addition, it is particularly preferably used as a topping for pizza.

### <Normal temperature, refrigerated, or frozen distribution>

In the present embodiment, a temperature referred to as "normal temperature" is 25°C. In addition, the temperature range in which the present cheese-like food can be distributed is as follows. Here, a temperature range referred to as "temperature range in normal temperature distribution" is 10°C or higher and 35°C or lower. It is preferably 10°C or higher and 20°C or lower. It is more preferably 10°C or higher and 15°C or lower. In addition, a temperature range in the refrigerated distribution is 0°C or higher and lower than 10°C. It is preferably 5°C or higher and lower than 10°C. Furthermore, a temperature range in the frozen distribution is lower than 0°C.

### <Meltability upon heating>

The meltability upon heating in the present embodiment is a property in which a solid state at a temperature of normal temperature or lower has fluidity upon heating. A temperature of the heating is not particularly limited, but is preferably 60°C or higher, more preferably 70°C or higher, and still more preferably 75°C or higher. In the above-described temperature range, the fluidity is easily exhibited. The present cheese-like food has fluidity at least at 70°C or higher and 100°C or lower. The upper limit of the temperature at which the fluidity is exhibited is not particularly limited, but in a case where a high temperature state is maintained for a long time, moisture in the present cheese-like food may evaporate, and thus the fluidity may decrease. Therefore, it is preferable to measure the meltability upon heating in the above-described temperature range. In the present cheese-like food, the property is imparted by containing at least the acid-treated starch.

### <Stretchability>

The stretchability in the present embodiment is a property in which a substance is stretched. In the present cheese-like food, the property is imparted by containing at least the hydroxypropylated starch. In the present cheese-like food, the stretchability is increased during heating. The present cheese-like food has stretchability at least at 70°C or higher and 100°C or lower. The stretchability of the present cheese-like food can be evaluated by heating the food and lifting one end thereof. In the present cheese-like food, in a case where 50 g of the food is heated by a microwave oven at 500 W for 60 seconds and one end of the food is stretched at a speed of 10 cm/s, the food stretches by at least 10 cm or more, preferably 15 cm or more until being broken. By stretching by 10 cm or more in the present evaluation, for example, in a case of being used as a topping for pizza, a stretchy feeling of real cheese can be felt.

### <Starch content>

A starch content according to the present embodiment is a total of contents of all starches represented by the acid-treated starch, the hydroxypropylated starch, a hydroxypropylated phosphoric acid crosslinked starch, and the like, which will be described later. The starch content in the present cheese-like food according to the present embodiment is not particularly limited, but a lower limit of the starch content is preferably 5.0% by weight, more preferably 10.0% by weight, and still more preferably 15.0% by weight. An upper limit of the starch content in the present cheese-like food according to the present embodiment is preferably 30.0% by weight, and more preferably 25.0% by weight.

### <Content of acid-treated starch>

A lower limit of a content of the acid-treated starch in the present cheese-like food according to the present embodiment is preferably 5.0% by weight, more preferably 8.0% by weight, and still more preferably 10.0% by weight. An upper limit of the content of the acid-treated starch in the present cheese-like food according to the present embodiment is preferably 30.0% by weight, more preferably 25.0% by weight, and still more preferably 20.0% by weight. By setting the content of the acid-treated starch within the above-described range, there is a tendency that a cheese-like food that is in a solid state in a temperature range of normal temperature or lower and that suitably melts upon heating can be produced.

### <Content of hydroxypropylated starch>

A lower limit of a content of the hydroxypropylated starch in the present cheese-like food according to the present embodiment is preferably 0.5% by weight, and more preferably 1.0% by weight. An upper limit of the content of the hydroxypropylated starch in the present cheese-like food according to the present embodiment is preferably 20.0% by weight, more preferably 10.0% by weight, and still more preferably 5.0% by weight. By setting the content of the hydroxypropylated starch within the above-described range, there is a tendency that a cheese-like food in which a cheese-like texture and stretchability during heating are suitably imparted can be produced.

A ratio of the content of the hydroxypropylated starch to the content of the acid-treated starch in the present cheese-like food according to the present embodiment is not particularly limited, but is preferably 0.05 or more and 0.5 or less, more preferably 0.1 or more and 0.3 or less, and still more preferably 0.15 or more and 0.25 or less. By setting the ratio within the above-described range, there is a tendency that a cheese-like food in which a cheese-like texture, meltability upon heating, and stretchability during heating are suitably imparted can be produced.

### <Moisture content>

A moisture content in the present cheese-like food according to the present embodiment is not particularly limited, but is preferably 40.0% by weight or more and 85.0% by weight or less. It is more preferably 55.0% by weight or more and 80.0% by weight or less. It is still more preferably 60.0% by weight or more and 75.0% by weight or less. The moisture content according to the present embodiment is a weight proportion of a pure water portion of the present cheese-like food, from which insoluble solid contents, soluble solid contents, and lipids are removed. A method of measuring the moisture content in the present cheese-like food is a heating drying method. Specific examples of a measuring device include a SmartSystem5 manufactured by CEM Corporation.

In addition, a weight ratio of the starch content to the moisture content in the present cheese-like food according to the present embodiment is not particularly limited, but is preferably 0.20 or more and 0.63 or less. It is more preferably 0.20 or more and less than 0.55. It is still more preferably 0.20 or more and 0.40 or less. In addition, a weight ratio of the acid-treated starch to the moisture content in the present cheese-like food according to the present embodiment is not particularly limited, but is preferably 0.10 or more and 0.70 or less. It is more preferably 0.10 or more and 0.55 or less. It is still more preferably 0.15 or more and 0.45 or less. It is even more preferably 0.20 or more and 0.40 or less. By setting the above-described numerical range, there is a tendency that a cheese-like food that is solid in a temperature range of normal temperature or lower and that has suitably imparted meltability upon heating can be produced.

### <Lipid content>

A lipid content in the present cheese-like food according to the present embodiment is not particularly limited, but is preferably 20% by weight or less. It is more preferably 15% by weight or less. It is still more preferably less than 10% by weight. The lipid content according to the present embodiment is a weight proportion of lipids contained in the present cheese-like food, from which insoluble solid contents, soluble solid contents, and moisture are removed. A method of measuring the lipid content in the present cheese-like food may be a known method. Specifically, the measuring method is an ether extraction method.

### <Cholesterol content>

A cholesterol content of the present cheese-like food is not particularly limited, but is preferably 3% by weight or less. It is more preferably 0% by weight. A method of measuring the cholesterol content may be a known method.

### <Protein content>

A protein content of the present cheese-like food is not particularly limited, but is preferably 10% by weight or less. It is more preferably 7.5% by weight or less. It is still more preferably 5.0% by weight or less. A method of measuring the protein content may be a known method.

### <Total solid content>

The total solid content of the present cheese-like food is not particularly limited, but is preferably 15.0% by weight or more and 50.0% by weight or less. It is more preferably 20% by weight or more and 45.0% by weight or less, and still more preferably 25.0% by weight or more and 40.0% by weight or less. A method of measuring the total solid content may be a known method.

### <pH>

A pH of the present cheese-like food according to the present embodiment is not particularly limited, but from the viewpoint of taste, it is preferably 4.0 or more and 8.0 or less, and more preferably 5.0 or more and 7.0 or less.

### [Example]

### [Test 1] Effect of difference in plant-derived processed product on heating meltability and stretchability

An effect of a difference in the plant-derived processed product used on heating meltability and stretchability of the cheese-like food was confirmed.

### <Examples 1 to 3>

The following components were mixed at ratios shown in Table 1: commercially available low-fat soy milk (manufactured by Fuji Oil Co., Ltd., product name: low-fat soy milk), high-fat soy milk (manufactured by Fuji Oil Co., Ltd., Mame Marge, which is a mixture of Mame Marge and soy milk cream at 1:1; "Mame Marge" is a registered trademark), coconut milk (manufactured by Tokai Starch Co., Ltd., product name: Coconut milk), an acid-treated starch A (manufactured by Matsutani Chemical Industry Co., Ltd., product name: Erian GEL 100), a hydroxypropylated starch (manufactured by Ingredion Japan K.K., product name: National78-0510), salt, seasoning (manufactured by FUJI FOOD INDUSTRY CO., LTD., product name: VARTEX IG20, "VARTEX" is a registered trademark), a flavoring agent, and water. Thereafter, the mixture was homogenized with a food processor, heated to reach 90°C, filled into a plastic container, and cooled to 10°C or lower to obtain a cheese-like food. The acid-treated starch A was obtained by acid-treating a starch derived from modified waxy potato. The hydroxypropylated starch was obtained by hydroxypropylating a starch derived from tapioca. The obtained cheese-like food was evaluated for meltability upon heating, stretchability, color tone, and flavor.

### <Evaluation of meltability upon heating>

Properties of each test classification were evaluated by visual observation. In a case where the state was solid at normal temperature and had fluidity in a case of being heated to approximately 60°C (50 g of each test sample retained at 4°C was placed in a plate and heated at 500 W for 60 seconds using a microwave oven), it was evaluated as "o". In a case where the state was fluid at normal temperature, or in a case where the state was solid at normal temperature and did not have fluidity even in a case of being heated to approximately 60°C, it was evaluated as "×".

### <Evaluation of stretchability>

Properties of each test classification were evaluated by visual observation and measurement. 50 g of each test sample stored in a refrigerator (4°C) was placed in a dish and heated in a microwave oven at 500 W for 60 seconds, one end of the sample was then scooped up with a spoon at a speed of approximately 10 cm/s and visually observed, and a stretched length was measured. The stretched length was measured by measuring a length of the sample immediately before the stretching of the test sample was broken. In a case where the stretched length was less than 5 cm, it was evaluated as "×"; in a case where the stretched length was 5 cm or more and less than 10 cm, it was evaluated as "△"; in a case where the stretched length was 10 cm or more and less than 15 cm, it was evaluated as "∘"; and in a case where the stretched length was 15 cm or more, it was evaluated as "⊚". In a case where the stretched length was 10 cm or more, a cheese-like stretch was felt in appearance, and in a case where the stretched length was 15 cm or more, a particularly preferred cheese-like stretch was felt in appearance.

### <Evaluation of color tone>

Color tone of each test classification was qualitatively evaluated by visual observation.

### <Evaluation of flavor>

Flavor of each test classification was evaluated by sensory evaluation. Three evaluators performed a qualitative evaluation of whether each test classification had a cheese-like flavor. A sample having a cheese-like flavor was evaluated as "∘".

### <Results and considerations>

As a result, all of the test classifications of Examples 1 to 3 had meltability upon heating and stretchability. In addition, all of the test classifications had a cheese-like flavor. That is, it was found that, by using the acid-treated starch A and the hydroxypropylated starch, it was possible to produce a cheese-like food having meltability upon heating and stretchability even in a case where the type of the plant-derived processed product was changed.

**[Table 1]**

| (unit: % by weight) | | | |
|---|---|---|---|
| | Example 1 | Example 2 | Example 3 |
| Blending | | | |
| Low-fat soy milk | 70 | 0 | 20 |
| High-fat soy milk | 0 | 70 | 0 |
| Coconut milk | 0 | 0 | 50 |
| Acid-treated starch A | 14 | 14 | 14 |
| Hydroxypropylated starch | 3 | 3 | 3 |
| Salt | 1 | 1 | 1 |
| Seasoning | 0.5 | 0.5 | 0.5 |
| Flavoring agent | 0.4 | 0.4 | 0.4 |
| Water | 11.1 | 11.1 | 11.1 |

| Nutritional component | | | |
|---|---|---|---|
| Lipid content (% by weight) | 2.6 | 13.7 | 14.4 |
| Protein content (% by weight) | 4.0 | 2.8 | 1.2 |
| Moisture content (% by weight) | 71.3 | 59.4 | 66.3 |
| Starch content (% by weight) | 17.0 | 17.0 | 17.0 |
| Starch content/moisture content | 0.24 | 0.29 | 0.26 |
| Content of acid-treated starch/moisture content | 0.20 | 0.24 | 0.21 |

| Evaluation result | | | |
|---|---|---|---|
| Meltability upon heating | ○ | ○ | ○ |
| Stretchability | ⊚ | ⊚ | ⊚ |
| Color | White | White | Blue-white |
| Flavor | ○ | ○ | ○ (rich) |

### [Test 2] Effect of difference in type of starch on heating meltability and stretchability

An effect of a difference in the type of starch used on heating meltability and stretchability of the cheese-like food was confirmed.

### <Examples 4 and 5, Reference Examples 1, and Comparative Examples 1 to 7>

The following components were mixed at ratios shown in Tables 2 and 3: the high-fat soy milk, the acid-treated starch A, an acid-treated starch B (manufactured by Ingredion Japan K.K., product name: Elastigel; "Elastigel" is a registered trademark), an oxidized starch A (manufactured by Glico Nutrition Co., Ltd., product name: Chemist; "Chemist" is a registered trademark), an oxidized starch B (manufactured by Matsutani Chemical Industry Co., Ltd., product name: Stabilose K; "Stabilose" is a registered trademark), an oxidized starch C (manufactured by Ingredion Japan K.K., product name: PRECISA604), an oxidized starch D (manufactured by Matsutani Chemical Industry Co., Ltd., product name: Stabilose Y; "Stabilose" is a registered trademark), an oxidized starch E (manufactured by Matsutani Chemical Industry Co., Ltd., product name: Stabilose TA13; "Stabilose" is a registered trademark), an oxidized starch F (manufactured by Matsutani Chemical Industry Co., Ltd., product name: Stabilose PEA; "Stabilose" is a registered trademark), an oxidized starch G (manufactured by Matsutani Chemical Industry Co., Ltd., product name: Stabilose S-10; "Stabilose" is a registered trademark), the hydroxypropylated starch, a hydroxypropylated phosphoric acid-crosslinked starch (manufactured by Matsutani Chemical Industry Co., Ltd., product name: Matsutani Lotus), salt, seasoning, a flavoring agent, and water. Thereafter, the mixture was homogenized with a food processor, heated to reach 90°C, filled into a plastic container, and cooled to 10°C or lower to obtain a cheese-like food. The acid-treated starch B was obtained by acid-treating a starch derived from sago palm. The same components as in Test 1 were used for the high-fat soy milk, the acid-treated starch A, the hydroxypropylated starch, the salt, the seasoning, the flavoring agent, and the water. The obtained cheese-like food was evaluated for meltability upon heating, stretchability, color tone, and flavor.

### <Evaluation of properties and color tone>

The meltability upon heating, the stretchability, and the color tone were evaluated by the same method as in Test 1.

### <Results and considerations>

In the test classifications (Examples 4 and 5) other than the test classifications using the acid-treated starch A, the stretchability was not sufficient. In addition, all of the test classifications had a cheese-like flavor. That is, it is presumed that the stretchability in the present cheese-like food is imparted without interfering with the stretchability by the hydroxypropylated starch, by using the starch derived from waxy crop, which has been acid-treated.

**[Table 2]**

| (unit: % by weight) | | | | | |
|---|---|---|---|---|---|
| | Example 4 | Reference Example 1 | Comparative Example 1 | Comparative Example 2 | Comparative Example 3 |
| Blending | | | | | |
| High-fat soy milk | 50 | 50 | 50 | 50 | 50 |
| Acid-treated starch A | 14 | 7 | 0 | 0 | 0 |
| Acid-treated starch B | 0 | 7 | 0 | 0 | 0 |
| Oxidized starch A | 0 | 0 | 14 | 0 | 0 |
| Oxidized starch B | 0 | 0 | 0 | 14 | 0 |
| Oxidized starch C | 0 | 0 | 0 | 0 | 14 |
| Hydroxypropylated starch | 3 | 3 | 3 | 3 | 3 |
| Hydroxypropylated phosphoric acid-crosslinked starch | 0 | 1 | 1 | 1 | 1 |
| Salt | 1 | 1 | 1 | 1 | 1 |
| Seasoning | 0.5 | 0.5 | 0.5 | 0.5 | 0.5 |
| Flavoring agent | 0.4 | 0.4 | 0.4 | 0.4 | 0.4 |
| Water | 31.1 | 30.1 | 30.1 | 30.1 | 30.1 |

| Nutritional component | | | | | |
|---|---|---|---|---|---|
| Lipid content (% by weight) | 9.8 | 9.8 | 9.8 | 9.8 | 9.8 |
| Protein content (% by weight) | 2.0 | 2.0 | 2.0 | 2.0 | 2.0 |
| Moisture content (% by weight) | 65.6 | 64.6 | 64.6 | 64.6 | 64.6 |
| Starch content (% by weight) | 17.0 | 18.0 | 18.0 | 18.0 | 18.0 |
| Starch content/moisture content | 0.26 | 0.28 | 0.28 | 0.28 | 0.28 |
| Content of acid-treated starch/moisture content | 0.21 | 0.11 | 0 | 0 | 0 |

| Evaluation result | | | | | |
|---|---|---|---|---|---|
| Meltability upon heating | ○ | ○ | ○ | ○ | ○ |
| Stretchability | ⊚ | × | × | × | × |
| Color | White | White | White | White | White |
| Flavor | ○ | ○ | ○ | ○ | ○ |

**[Table 3]**

| (unit: % by weight) | | | | | |
|---|---|---|---|---|---|
| | Example 5 | Comparative Example 4 | Comparative Example 5 | Comparative Example 6 | Comparative Example 7 |
| Blending | | | | | |
| High-fat soy milk | 50 | 50 | 50 | 50 | 50 |
| Acid-treated starch A | 14 | 0 | 0 | 0 | 0 |
| Oxidized starch D | 0 | 14 | 0 | 0 | 0 |
| Oxidized starch E | 0 | 0 | 14 | 0 | 0 |
| Oxidized starch F | 0 | 0 | 0 | 14 | 0 |
| Oxidized starch G | 0 | 0 | 0 | 0 | 14 |
| Hydroxypropylated starch | 3 | 3 | 3 | 3 | 3 |
| Salt | 1 | 1 | 1 | 1 | 1 |
| Seasoning | 0.5 | 0.5 | 0.5 | 0.5 | 0.5 |
| Flavoring agent | 0.4 | 0.4 | 0.4 | 0.4 | 0.4 |
| Water | 31.1 | 31.1 | 31.1 | 31.1 | 31.1 |

| Nutritional component | | | | | |
|---|---|---|---|---|---|
| Lipid content (% by weight) | 9.8 | 9.8 | 9.8 | 9.8 | 9.8 |
| Protein content (% by weight) | 2.0 | 2.0 | 2.0 | 2.0 | 2.0 |
| Moisture content (% by weight) | 65.6 | 65.6 | 65.6 | 65.6 | 65.6 |
| Starch content (% by weight) | 17.0 | 17.0 | 17.0 | 17.0 | 17.0 |
| Starch content/moisture content | 0.26 | 0.26 | 0.26 | 0.26 | 0.26 |
| Content of acid-treated starch/moisture content | 0.21 | 0.21 | 0 | 0 | 0 |

| Evaluation result | | | | | |
|---|---|---|---|---|---|
| Meltability upon heating | ○ | ○ | ○ | ○ | ○ |
| Stretchability | ⊚ | × | × | × | × |
| Color | White | White | White | White | White |
| Flavor | ○ | ○ | ○ | ○ | ○ |

### [Test 3] Effect of difference in type of edible oil and fat on meltability upon heating and stretchability

An effect of a difference in the type of edible oil and fat used on meltability upon heating and stretchability of the cheese-like food was confirmed.

### <Examples 6 to 10>

The following components were mixed at ratios shown in Table 4: the high-fat soy milk, the acid-treated starch A, rapeseed oil (manufactured by Nisshin Oillio Group Ltd., product name: Nissin Canola Oil), soybean oil (manufactured by Nisshin Oillio Group Ltd., product name: Soybean White Oil), rice oil (manufactured by Nisshin Oillio Group Ltd., product name: Nissin Rice Oil), sunflower oil (manufactured by Showa Sangyo Co., Ltd., product name: Olein Rich Sunflower Oil), coconut oil (manufactured by Nisshin Oillio Group Ltd., product name: Coconut Oil), the hydroxypropylated starch, the hydroxypropylated phosphoric acid-crosslinked starch, salt, seasoning, a flavoring agent, and water. The same components as in Test 1 and Test 2 were used for the high-fat soy milk, the acid-treated starch A, the hydroxypropylated starch, the hydroxypropylated phosphoric acid-crosslinked starch, the salt, the seasoning, and the flavoring agent. Thereafter, the mixture was homogenized with a food processor, heated to reach 90°C, filled into a plastic container, and cooled to 10°C or lower to obtain a cheese-like food.

**[Table 4]**

| (unit: % by weight) | | | | | |
|---|---|---|---|---|---|
| | Example 6 | Example 7 | Example 8 | Example 9 | Example 10 |
| Blending | | | | | |
| High-fat soy milk | 50 | 50 | 50 | 50 | 50 |
| Edible vegetable oil and fat (rapeseed oil) | 3 | 0 | 0 | 0 | 0 |
| Edible vegetable oil and fat (soybean oil) | 0 | 3 | 0 | 0 | 0 |
| Edible vegetable oil and fat (rice oil) | 0 | 0 | 3 | 0 | 0 |
| Edible vegetable oil and fat (sunflower oil) | 0 | 0 | 0 | 3 | 0 |
| Edible vegetable oil and fat (coconut oil) | 0 | 0 | 0 | 0 | 3 |
| Acid-treated starch A | 14 | 14 | 14 | 14 | 14 |
| Hydroxypropylated starch | 3 | 3 | 3 | 3 | 3 |
| Hydroxypropylated phosphoric acid-crosslinked starch | 1 | 1 | 1 | 1 | 1 |
| Salt | 1 | 1 | 1 | 1 | 1 |
| Seasoning | 0.5 | 0.5 | 0.5 | 0.5 | 0.5 |
| Flavoring agent | 0.4 | 0.4 | 0.4 | 0.4 | 0.4 |
| Water | 27.1 | 27.1 | 27.1 | 27.1 | 27.1 |

| Nutritional component | | | | | |
|---|---|---|---|---|---|
| Lipid content (% by weight) | 12.8 | 12.8 | 12.8 | 12.8 | 12.8 |
| Protein content (% by weight) | 2.0 | 2.0 | 2.0 | 2.0 | 2.0 |
| Moisture content (% by weight) | 61.6 | 61.6 | 61.6 | 61.6 | 61.6 |
| Starch content (% by weight) | 18.0 | 18.0 | 18.0 | 18.0 | 18.0 |
| Starch content/moisture content | 0.29 | 0.29 | 0.29 | 0.29 | 0.29 |
| Content of acid-treated starch/moisture content | 0.23 | 0.23 | 0.23 | 0.23 | 0.23 |

| Evaluation result | | | | | |
|---|---|---|---|---|---|
| Meltability upon heating | ○ | ○ | ○ | ○ | ○ |
| Stretchability | ⊚ | ⊚ | ⊚ | ⊚ | ⊚ |
| Color | White | White | White | White | White |
| Flavor | ○ | ○ | ○ | ○ | ○ |

### <Results>

A change in the type of the edible oil and fat used did not affect the properties of the cheese-like food. In addition, all of the test classifications had a cheese-like flavor. That is, it was possible to produce a cheese-like food having meltability upon heating and sufficient stretchability regardless of the type of the edible oil and fat.

### [Test 4] Effect of use of dietary fiber on meltability upon heating and stretchability

An effect of use of dietary fiber on the meltability upon heating and the stretchability of the cheese-like food was confirmed.

### <Examples 6 and 11 to 17>

The following components were mixed at ratios shown in Table 5: the high-fat soy milk, the acid-treated starch A, rapeseed oil (manufactured by Nisshin Oillio Group Ltd., product name: Nissin Canola Oil), the hydroxypropylated starch, the hydroxypropylated phosphoric acid-crosslinked starch, indigestible dextrin (manufactured by Matsutani Chemical Industry Co., Ltd., product name: E-Fiber), dextrin (manufactured by Matsutani Chemical Industry Co., Ltd., product name: Maltodextrin TK16), salt, seasoning, a flavoring agent, and water. The same components as in Test 1 and Test 2 were used for the high-fat soy milk, the acid-treated starch A, the hydroxypropylated starch, the hydroxypropylated phosphoric acid-crosslinked starch, the salt, the seasoning, and the flavoring agent. Thereafter, the mixture was homogenized with a food processor, heated to reach 90°C, filled into a plastic container, and cooled to 10°C or lower to obtain a cheese-like food.

**[Table 5]**

| (unit: % by weight) | | | | | | | | |
|---|---|---|---|---|---|---|---|---|
| | Example 6 | Example 11 | Example 12 | Example 13 | Example 14 | Example 15 | Example 16 | Example 17 |
| Blending | | | | | | | | |
| High-fat soy milk | 50 | 50 | 50 | 50 | 50 | 50 | 50 | 50 |
| Edible vegetable oil and fat (rapeseed oil) | 0 | 0 | 0 | 9 | 9 | 9 | 9 | 9 |
| Acid-treated starch A | 14 | 14 | 14 | 14 | 20 | 20 | 20 | 20 |
| Hydroxypropylated starch | 3 | 3 | 3 | 3 | 3 | 3 | 3 | 3 |
| Hydroxypropylated phosphoric acid-crosslinked starch | 1 | 3 | 1 | 1 | 1 | 1 | 1 | 1 |
| E-Fiber | | | 5 | 10 | 5 | 10 | | |
| Dextrin | | | | | | | 5 | 10 |
| Salt | 1 | 1 | 1 | 1 | 1 | 1 | 1 | 1 |
| Seasoning | 0.5 | 0.5 | 0.5 | 0.5 | 0.5 | 0.5 | 0.5 | 0.5 |
| Flavoring agent | 0.4 | 0.4 | 0.4 | 0.4 | 0.4 | 0.4 | 0.4 | 0.4 |
| Water | 30.1 | 28.1 | 25.1 | 11.1 | 10.1 | 5.1 | 10.1 | 5.1 |

| Nutritional component | | | | | | | | |
|---|---|---|---|---|---|---|---|---|
| Lipid content (% by weight) | 12.8 | 12.8 | 12.8 | 18.8 | 18.8 | 18.8 | 18.8 | 18.8 |
| Protein content (% by weight) | 2.0 | 2.0 | 2.0 | 2.0 | 2.0 | 2.0 | 2.0 | 2.0 |
| Moisture content (% by weight) | 64.6 | 62.6 | 59.6 | 45.6 | 44.6 | 39.6 | 44.6 | 39.6 |
| Starch content (% by weight) | 18.0 | 20.0 | 18.0 | 18.0 | 24.0 | 24.0 | 24.0 | 24.0 |
| Starch content/moisture content | 0.28 | 0.32 | 0.30 | 0.39 | 0.54 | 0.61 | 0.54 | 0.61 |
| Content of acid-treated starch/moisture content | 0.22 | 0.22 | 0.23 | 0.31 | 0.45 | 0.51 | 0.45 | 0.51 |

| Evaluation result | | | | | | | | |
|---|---|---|---|---|---|---|---|---|
| Meltability upon heating | ○ | ○ | ○ | ○ | ○ | ○ | ○ | ○ |
| Stretchability | ⊚ | ⊚ | ⊚ | ○ | ⊚ | ⊚ | ⊚ | ⊚ |
| Color | White | White | White | White | White | White | White | White |
| Flavor | ○ | ○ | ○ | ○ | ○ | ○ | ○ | ○ |

### <Results and considerations>

In a case where the content of the hydroxypropylated phosphoric acid crosslinked starch was increased, and in a case where the indigestible dextrin and the dextrin were contained, a cheese-like food having meltability upon heating and stretchability could be produced. In addition, all of the test classifications had a cheese-like flavor.

### INDUSTRIAL APPLICABILITY

A useful field of the present invention is the production and sale of cheese-like food.

## Claims

1. A cheese-like food comprising at least:
a plant-derived processed product;
an acid-treated starch; and
a hydroxypropylated starch,
wherein a raw material of the acid-treated starch is a starch derived from a waxy crop.

2. The food according to Claim 1,
wherein a raw material of the hydroxypropylated starch is a starch derived from tapioca.

3. The food according to Claim 1 or 2,
wherein a content of the acid-treated starch in the food is 5.0% by weight or more and 30.0% by weight or less.

4. The food according to Claim 1 or 2,
wherein a content of the hydroxypropylated starch in the food is 1.0% by weight or more and 20.0% by weight or less.

5. The food according to Claim 1 or 2,
wherein a weight ratio of a starch content to a moisture content in the food is 0.20 or more and 0.63 or less.

6. The food according to Claim 5,
wherein a weight ratio of an acid-treated starch content to the moisture content in the food is 0.10 or more and 0.70 or less.

7. A cheese-like food which is solid at 25°C and has fluidity at least at 70°C or higher and 100°C or lower,
wherein, when 50 g of the food is heated by a microwave oven at 500 W for 60 seconds and one end of the food is stretched at a speed of 10 cm/s, the food stretches by at least 15 cm until being broken.

8. A method for producing a cheese-like food, comprising at least:
a mixing in which at least a plant-derived processed product, an acid-treated starch, and a hydroxypropylated starch are mixed to obtain a mixture,
wherein a raw material of the acid-treated starch is a starch derived from a waxy crop.

9. The production method according to Claim 8,
wherein a raw material of the hydroxypropylated starch is a starch derived from tapioca.

10. The production method according to Claim 8 or 9,
wherein a content of the acid-treated starch in the mixture is 5.0% by weight or more and 30.0% by weight or less.

11. The production method according to Claim 8 or 9,
wherein a content of the hydroxypropylated starch in the mixture is 1.0% by weight or more and 20.0% by weight or less.

12. The production method according to Claim 8 or 9, further comprising:
a homogenization in which the mixture is homogenized.

13. The production method according to Claim 8 or 9,
wherein a weight ratio of a starch content to a moisture content in the mixture is 0.20 or more and less than 0.63.

14. The production method according to Claim 13,
wherein a weight ratio of an acid-treated starch content to the moisture content in the mixture is 0.10 or more and less than 0.70.
